# EUROPEAN PATENT APPLICATION

(11) **EP 2 284 211 A1**
(43) Date of publication of application: **16.02.2011**
(21) Application number: 09750697.6
(22) Date of filing: 22.05.2009
(51) Int. Cl.: C08J 3/05, C08L 23/08

(54) **AQUEOUS EMULSION CONTAINING A-OLEFIN/(METH)ACRYLATE COPOLYMER AND METHOD FOR MANUFACTURING THE SAME**

(30) Priority: 23.05.2008 JP 2008135289
(71) Applicant: Sumitomo Chemical Company, Limited, Tokyo 104-8260 (JP)
(72) Inventor: OKUBO, Yoshihito, Toyonaka-shi Osaka 561-0802 (JP)
(74) Representative: Henkel, Feiler & Hänzel
(86) International application number: PCT/JP2009/059827
(87) International publication number: WO 2009/142335

(57) **Abstract**

A method of producing an aqueous emulsion comprising a first step of kneading a mixture containing the following copolymer (A) and a polyoxyethylene polyoxypropylene block copolymer (B) by a multi-axis shearing mixer under heating to obtain a kneaded material, and a second step of dispersing the kneaded material obtained in the first step in water, and an aqueous emulsion comprising a dispersed particle containing the following copolymer (A) and a polyoxyethylene polyoxypropylene block copolymer (B) and dispersed in water, wherein the dispersed particle has a volume-based median size of 0.8 µm or less, are provided:
Copolymer (A): a copolymer containing a structural unit derived from at least one α-olefin selected from the group consisting of ethylene and propylene and a structural unit derived from at least one (meth)acrylate selected from the group consisting of acrylates having 4 to 12 carbon atoms and methacrylates having 5 to 12 carbon atoms.

## Description

### Technical Field

The present invention relates to an aqueous emulsion containing an α-olefin/(meth)acrylate copolymer and a production method thereof, and the like.

### Background Art

As a method of producing an aqueous emulsion containing a dispersed ethylene/(meth)acrylate copolymer, for example, JP-A No. 2006-16414 discloses a method carried out in production of ethylene/(meth)acrylate copolymer particles, in which a mixture of 100 parts by weight an ethylene/(meth)acrylate copolymer, 40 to 1500 parts by weight of water and 3 to 30 parts by weight of an ethylene oxide/propylene oxide copolymer having a weight-average molecular weight of 4000 to 30000 is heated at a temperature not lower than the melting point of the ethylene/(meth)acrylate copolymer thereby melting the ethylene/(meth)acrylate copolymer, and the above-described mixture is stirred to emulsify this. Paragraph [0023] in this literature discloses use of a pressure resistant vessel having a heating means which is capable of heating to a temperature not lower than the melting point of the ethylene/(meth)acrylate copolymer and a stirring means which is capable of giving sufficient shearing force to the content, and specifically, use of a stirrer-equipped heat resistant autoclave or heat resistant homogenizer is disclosed, and further, an example using an oil circulation heating-jacketed autoclave having a turbine shaped stirring blade is disclosed.

### Disclosure of the Invention

It is required a method which is capable of producing with high production efficiency an aqueous emulsion obtained by dispersing an α-olefin/(meth)acrylate copolymer such as an ethylene/methyl methacrylate copolymer or the like.

The present invention relates to, in one aspect, a method of producing an aqueous emulsion comprising a first step of kneading a mixture containing the following copolymer (A) and a polyoxyethylene polyoxypropylene block copolymer (B) by a multi-axis shearing mixer under heating to obtain a kneaded material, and a second step of dispersing the kneaded material obtained in the first step in water:
Copolymer (A): a copolymer containing a structural unit derived from at least one α-olefin selected from the group consisting of ethylene and propylene and a structural unit derived from at least one (meth)acrylate selected from the group consisting of acrylates having 4 to 12 carbon atoms and methacrylates having 5 to 12 carbon atoms.

The present invention relates to, in another aspect, an aqueous emulsion comprising a dispersed particle containing the same copolymer (A) as defined above and a polyoxyethylene polyoxypropylene block copolymer (B) and dispersed in water, wherein the dispersed particle has a volume-based median size of 0.8 µm or less.

The present invention relates to, in still another aspect, a membrane obtained by coating the above-described aqueous emulsion on a base material, and removing water from the coated aqueous emulsion.

According to the present invention, an aqueous emulsion containing a dispersed α-olefin/(meth)acrylate copolymer can be produced with high production efficiency. Particularly, an emulsion containing a dispersed particle having a volume-based median size of submicron order can be produced with high production efficiency.

### Embodiments for Carrying Out the Invention

The copolymer (A) to be used in the present invention is a copolymer containing a structural unit derived from at least one α-olefin selected from the group consisting of ethylene and propylene and a structural unit derived from at least one (meth)acrylate selected from the group consisting of acrylates having 4 to 12 carbon atoms and methacrylates having 5 to 12 carbon atoms. As the structural unit derived from an α-olefin, a structural unit derived from ethylene is preferable.

The content of the structural unit derived from at least one α-olefin selected from the group consisting of ethylene and propylene is usually 60 to 90 mol%, preferably 70 to 85 mol% with respect to 100 mol% of all structural units constituting the copolymer (A).

In the present invention, the (meth)acrylate is a generic name of an acrylate and a methacrylate. The (meth)acrylate belonging to the group consisting of acrylates having 4 to 12 carbon atoms and methacrylates having 5 to 12 carbon atoms is referred to as "specific (meth)acrylate".

Examples of the acrylate having 4 to 12 carbon atoms include methyl acrylate, ethyl acrylate, butyl acrylate, n-hexyl acrylate, cyclohexyl acrylate and 2-ethylhexyl acrylate, and particularly, methyl acrylate and ethyl acrylate are preferable.

Examples of the methacrylate having 5 to 12 carbon atoms include methyl methacrylate, ethyl methacrylate, butyl methacrylate, n-hexyl methacrylate, cyclohexyl methacrylate and 2-ethylhexyl methacrylate, and particularly, methyl methacrylate and ethyl methacrylate are preferable.

As the specific (meth)acrylate constituting the copolymer (A), at least one (meth)acrylate selected from the group consisting of methyl acrylate, ethyl acrylate, methyl methacrylate and ethyl methacrylate is preferable, and particularly, methyl methacrylate is preferable.

The content of the structural unit derived from a (meth)acrylate in the copolymer (A) is usually 10 to 40 mol%, preferably 20 to 40 mol% with respect to 100 mol% of all structural units constituting the copolymer (A).

In the copolymer (A), for example, a structural unit derived from an addition-polymerizable monomer such as a structural unit derived from an α-olefin other than ethylene and propylene, a structural unit derived from a vinylidene compound, a structural unit derived from cycloolefin, a structural unit derived from a diene compound, or the like may also be contained, in addition to the above-described essential structural units (that is, the structural unit derived from at least one α-olefin selected from the group consisting of ethylene and propylene, and the structural unit derived from at least one specific (meth)acrylate).

The total content of the structural unit derived from at least one α-olefin selected from the group consisting of ethylene and propylene and the structural unit derived from at least one specific (meth)acrylate in the copolymer (A) is 90 mol% or more with respect to 100 mol% of all structural units constituting the copolymer (A), and particularly, it is preferable that the copolymer (A) contains substantially only the the structural unit derived from at least one α-olefin selected from the group consisting of ethylene and propylene and the structural unit derived from at least one specific (meth)acrylate.

Here, the α-olefin other than at least one α-olefin selected from the group consisting of ethylene and propylene is usually a linear α-olefin having 4 to 20 carbon atoms, and examples thereof include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nanodecene, 1-eicosene and the like.

The vinylidene compound which is one of addition-polymerizable monomers is a compound represented by the following formula. 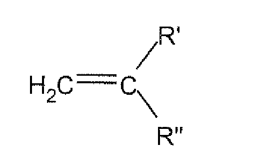 (wherein, R' and R" represent each independently a linear alky group having 1 to 18 carbon atoms, a branched alkyl group having 3 to 18 carbon atoms, a cycloalkyl group having 3 to 18 carbon atoms or a halogen atom.).

Examples of the above-described vinylidene compound include vinylidene chloride and 2-methylpropene.

Examples of the cycloolefin which is one of addition-polymerizable monomers include cyclobutene, cyclopentene, cyclohexene, cyclooctene, 3-methylcyclopentene, 4-methylcyclopentene, 3-methylcyclohexene, 2-norbornene, 5-methyl-2-norbornene, 5-ethyl-2-norbornene, 5-butyl-2-norbornene, 5-phenyl-2-norbornene, 5-benzyl-2-norbornene, 2-tetracyclododecene, 2-tricyclodecene, 2-tricycloundecene, 2-pentacyclopentadecene, 2-pentacyclohexadecene, 8-methyl-2-tetracyclododecene, 8-ethyl-2-tetracyclododecene, 5-acetyl-2-norbornene, 5-acetyloxy-2-norbornene, 5-methoxycarbonyl-2-norbornene, 5-ethoxycarbonyl-2-norbornene, 5-methyl-5-methoxycarbonyl-2-norbornene, 5-cyano-2-norbornene, 8-methoxycarbonyl-2-tetracyclododecene, 8-methyl-8-methoxycarbonyl-2-tetracyclododecene and 8-cyano-2-tetracyclododecene. Preferable cycloolefins include cyclopentene, cyclohexene, cyclooctene, 2-norbornene, 5-methyl-2-norbornene, 5-phenyl-2-norbornene, 2-tetracyclododecene, 2-tricyclodecene, 2-tricycloundecene, 2-pentacyclopentadecene, 2-pentacyclohexadecene, 5-acetyl-2-norbornene, 5-acetyloxy-2-norbornene, 5-methoxycarbonyl-2-norbornene, 5-methyl-5-methoxycarbonyl-2-norbornene and 5-cyano-2-norbornene, and particularly preferable are 2-norbornene and 2-tetracyclododecene.

Examples of the diene compound which is one of addition-polymerizable monomers include 1,3-butadiene, 1,4-pentadiene, 1,5-hexadiene, 1,6-heptadiene, 1,7-octadiene, 1,5-cyclooctadiene, 2,5-norbornadiene, dicyclopentadiene, 5-vinyl-2-norbornene, 5-allyl-2-norbornene, 4-vinyl-1-cyclohexene and 5-ethylidene-2-norbornene. Particularly preferable diene compounds include 1,4-pentadiene, 1,5-hexadiene, 2,5-norbornadiene, dicyclopentadiene, 5-vinyl-2-norbornene, 4-vinyl-1-cyclohexene and 5-ethylidene-2-norbornene.

In one preferable embodiment, the copolymer (A) is a copolymer containing a structural unit derived from ethylene and structural unit derived from at least one (meth)acrylate selected from the group consisting of methyl acrylate, ethyl acrylate, methyl methacrylate and ethyl methacrylate. Particularly, the copolymer (A) is preferably a copolymer containing a structural unit derived from ethylene and a structural unit derived from methyl methacrylate.

Examples of the copolymer (A) include a block polymer and a random copolymer composed of a structural unit derived from at least one α-olefin selected from the group consisting of ethylene and propylene and a structural unit derived from at least one specific (meth)acrylate, and a random copolymer is preferable.

As the method of producing the copolymer (A), exemplified is a method of polymerizing at least one specific (meth)acrylate, and if necessary, a further addition-polymerizable monomer in the presence of a catalyst, in an atmosphere containing ethylene and/or propylene.

Examples of the above-described catalyst include radical polymerization catalysts and ion polymerization catalysts, and specific examples thereof include peroxide catalysts, Ziegler-Natta catalysts, metallocene catalysts and the like, and examples of the above-described polymerization method include a solution polymerization method, slurry polymerization method, high pressure ion polymerization method, high pressure radical polymerization method and gas phase polymerization method.

As an example of the copolymer (A), an ethylene/methyl methacrylate copolymer marketed from Sumitomo Chemical Co., Ltd. under the registered trademark of Acryft is mentioned, and such a commercially available product can be used as it is as the copolymer (A).

The melt flow rate of the copolymer (A) measured according to JIS K7210 is usually in the range of 1 g/10 minutes to 1000 g/10 minutes, preferably in the range of 10 g/10 minutes to 1000 g/10 minutes, more preferably in the range of 100 g/10 minutes to 500 g/10 minutes.

The polyoxyethylene polyoxypropylene block copolymer (B) to be used in the first step contains a polyoxyethylene block represented by the chemical formula -(-CH₂CH₂O-)ₘ- (here, m represents an integer of 2 or more) and a polyoxypropylene block represented by the chemical formula -(-CH₂CHCH₃O-)ₙ- (here, m represents an integer of 2 or more), and examples thereof include a copolymer obtained by polymerizing propylene oxide to polyethylene glycol, and a copolymer obtained by polymerizing ethylene oxide to polypropylene glycol. The copolymer obtained by polymerizing ethylene oxide to polypropylene glycol is marketed from ADEKA K.K. under the registered trademark of Pluronic.

Examples of the polyoxyethylene polyoxypropylene block copolymer (B) to be suitably used in the present invention include polymers containing a polyoxyethylene block in an amount of 20 to 90 wt% wherein the formula weight of the polyoxypropylene block is 1000 to 5000. The copolymers (B) to be particularly suitably used include polymers containing a polyoxyethylene block in an amount of 70 to 90 wt% wherein the formula weight of the polyoxypropylene block is 1000 to 5000, and polymers containing a polyoxyethylene block in an amount of 20 to 90 wt% wherein the formula weight of the polyoxypropylene block is 3000 to 5000. The copolymers (B) to be more preferably used include polymers containing a polyoxyethylene unit in an amount of 70 to 90 wt% wherein the formula weight of the polyoxypropylene block is 3000 to 5000.

"Multi-axis shearing mixer" in the present invention is an apparatus having two or more mixing elements and mixing materials under shearing by rotation of the mixing elements, and it may be a batch-wise apparatus or a continuous apparatus, and specific examples thereof include batch-wise kneaders such as a roll mill, Banbury mixer, kneader, twin-axis mixer Laboplastomill (trade name of Toyo Seiki Seisaku-sho Co., Ltd.) and Laboplastomill Micro (trade name of Toyo Seiki Seisaku-sho Co., Ltd.), and the like; and continuous extruders such as a twin-axis extruder, and the like. In the present invention, horizontal multi-axis extruders are preferable, and a twin-axis extruder is particularly preferable.

In the first step, shearing stress is imparted to a mixture containing the copolymer (A) and polyoxyethylene polyoxypropylene block copolymer (B) at a shearing speed of, for example, 500 sec⁻¹ to 30000 sec⁻¹, preferably 1000 sec⁻¹ to 10000 sec⁻¹, more preferably 2500 sec⁻¹ to 5000 sec⁻¹. Here, in the case of a roll mill, the shearing speed is a value (quotient) obtained by dividing the inter-roll clearance by the circumferential velocity of the roll. In the case of an apparatus combining a screw element and a barrel, the shearing speed is a value (quotient) obtained by dividing the circumferential velocity [mm/sec] of the screw element outermost circumferential part by the clearance [mm] between the screw and the barrel.

For obtaining a kneaded material which can be easily dispersed in the second step, it is preferable that kneading is carried out so that the shearing speed in the above-described range is kept for about 10 seconds to about 10 minutes, and it is more preferable that kneading is carried out so that the shearing speed in the above-described range is kept for about 1 minute to about 5 minutes, in the first step.

A specific example of the method of producing an aqueous emulsion using a multi-axis extruder will be explained. Use is made of a multi-axis extruder having two or more screws in a barrel and having a hopper, the barrel having therein a compressing zone and a measuring zone. In the first step, the copolymer (A) is fed from the above-described hopper into the above-described extruder, and the copolymer (A) is melt-kneaded under heating. Further, the polyoxyethylene polyoxypropylene block copolymer (B) is fed from at least one liquid feeding port disposed in the compressing zone and/or metering zone of the extruder, and the above-described copolymer (A) and copolymer (B) are kneaded to obtain a kneaded material.

The mixture containing the copolymer (A) and the polyoxyethylene polyoxypropylene block copolymer (B) is melt-kneaded, preferably, under heating in a temperature range of not lower than [melting point] of the copolymer (A) and not higher than [melting point + 50°C] of the copolymer (A). The above-described temperature range is preferably 70 to 120°C, particularly preferably 70 to 100°C.

The second step is a step of dispersing the kneaded material obtained in the first step in water, and specific examples thereof include a method in which the kneaded material obtained in the first step is added into a vessel containing water and this is dispersed, a method in which kneading (first step) and dispersing (second step) of the copolymer (A), polyoxyethylene polyoxypropylene block copolymer (B) and water are carried out simultaneously in a kneader, a method in which the copolymer (A) and polyoxyethylene polyoxypropylene block copolymer (B) are kneaded in an anterior half part of a kneader to obtain a kneaded material (first step), and water is added to a posterior half part of a kneader and the above-described kneaded material is dispersed in water therein (second step), and other methods.

The aqueous emulsion of the present invention is an emulsion containing a dispersed particle dispersed in water, the dispersed particle containing the polyoxyethylene polyoxypropylene block copolymer (B) as an emulsifier and containing the copolymer (A) as the main component.

According to the method of the present invention, an aqueous emulsion containing a dispersed particle having a volume-based median size of 0.8 µm or less can be obtained. Depending on selection of the copolymer (A) and block copolymer (B) to be used and the value of shearing speed in the first step, an aqueous emulsion containing a dispersed particle having a volume-based median size in the range of 0.01 to 0.8 µm can be obtained, and particularly, if the method is carried out under suitably selected conditions, an aqueous emulsion containing a dispersed particle having a volume-based median size in the range of 0.3 to 0.7 µm can be obtained. Here, the volume-based median size means a particle size at which the value of integrated particle size distribution corresponds to 50% on a volume basis.

In the aqueous emulsion obtained by the method of the present invention, for example, aqueous emulsions such as a polyurethane aqueous emulsion, ethylene-vinyl acetate copolymer aqueous emulsion and the like; thermo-setting resins such as a urea resin, melamine resin, phenol resin and the like; fillers such as clay, kaolin, talc, calcium carbonate and the like; preservatives, antirust agents, defoaming agents, foaming agents; thickening agents such as polyacrylic acid, poly ether, methylcellulose, carboxymethylcellulose, polyvinyl alcohol, starch and the like; viscosity modifiers, flame retardants; pigments such as titanium oxide and the like; high boiling point solvents such as dibasic acid dimethyl succinate, dimethyl adipate and the like; plasticizers and the like, may be compounded. Especially, silicon-based additives such as polyether-modified polydimethylsiloxane and the like, and acetylene glycol surfactants are preferably added. It is recommended to use fillers for improving flame retardance and coatability in adhering, and the use amount thereof is usually about 1 to 500 parts by weight, preferably about 5 to 200 parts by weight with respect to 100 parts by weight of the solid content of the emulsion.

Since the aqueous emulsion obtained by the method of the present invention is excellent in a dispersed condition of a dispersed particle in water, even if the aqueous emulsion is allowed to stand still, a longer time is required for generation of an aqueous phase derived from water contained in the aqueous emulsion, thus, it can exist stably as an aqueous emulsion.

The aqueous emulsion of the present invention shows high safety to environments, because of substantially no inclusion of an organic solvent. A layer (membrane) of an α-olefin/(meth)acrylate copolymer is formed by coating the aqueous emulsion of the present invention on a base material, then, removing water from the aqueous emulsion. Further, the formed copolymer layer (membrane) is excellent in moldability. Because of such excellent properties, the aqueous emulsion of the present invention can be suitably used as a coating type adhesive, a paint, a primer, or a binder for paint or prinking.

### EXAMPLES

The present invention will be illustrated further in detail by examples shown below. Parts and % in examples are by weight unless otherwise stated.

The volume-based median size of a dispersed particle is a volume-based median size obtained by using a laser diffraction-mode particle size distribution measuring apparatus Mastersizer2000 (manufactured by MALVERN) at a particle refractive index of 1.50-0.20i.

### <Production Examples of aqueous emulsion>

### (Example 1)

The cell temperature of a twin-axis mixer Laboplastomill Micro (registered trademark of Toyo Seiki Seisaku-sho Co., Ltd.) (equipped with segment mixer KF15V type) was adjusted to 90°C, then, 8.8 g of an ethylene/methyl methacrylate copolymer Acryft (registered trademark of Sumitomo Chemical Co., Ltd.) CM5021 (content of structural unit derived from methyl methacrylate: 28%, melt flow rate measured according to JIS K7210: 450 g/10 minutes, melting point: 67°C) was enclosed in the cell, and stirred at 450 rpm for 1 minute. The shearing speed in this procedure was 2850 sec⁻¹. Subsequently, 1.3 g of Pluronic (registered trademark of ADEKA K.K.) F108 (weight-average molecular weight: 15500, polyoxyethylene block content: 80%, polyoxypropylene block formula weight: 3250) as the polyoxyethylene polyoxypropylene block copolymer (B) was added together with 0.6 g of water, and the resultant mixture was kneaded at a rate of 450 rpm for 3 minutes while maintaining the temperature of the cell at 90°C. The maximum shearing speed was 2850 sec⁻¹.

Next, the content was taken out, and dispersed in a vessel containing hot water of about 80°C, to obtain an aqueous emulsion of the present invention. The dispersed particle in the aqueous emulsion had a volume-based median size of 0.47 µm.

The resultant aqueous emulsion was allowed to stand still at a room temperature of about 25°C for one week, however, a free aqueous phase containing substantially no dispersed particle was not observed, revealing that the aqueous emulsion was a stable emulsion.

### (Examples 2 to 5)

Aqueous emulsions of the present invention were obtained in the same manner as in Example 1 excepting that commercially available products described in Table 1 were used as the polyoxyethylene polyoxypropylene block copolymer (B) and the kneading conditions (cell temperature, revolution and shearing speed) after addition of the polyoxyethylene polyoxypropylene block copolymer (B) were changed to kneading conditions described in Table 1.

The volume-based median sizes and dispersed conditions of the resultant aqueous emulsions are shown in Table 1.

**Table 1**

| | Example 2 | Example 3 | Example 4 | Example 5 |
|---|---|---|---|---|
| polyoxyethylene polyoxypropylene block copolymer (B) | | | | |
| trade name | Pluronic *1 | Pluronic *1 | Pluronic *1 | Pluronic *1 |
| | F-108 | F-88 | F-68 | F-68 |
| weight-average | 15500 | 10800 | 8350 | 8350 |
| molecular weight | | | | |
| EO (%)^{*2} | 80 | 80 | 80 | 80 |
| Fw (PO)^{*3} | 3250 | 2250 | 1750 | 1750 |

| kneading conditions | | | | |
|---|---|---|---|---|
| cell temperature (°C) | 90 | 90 | 90 | 75 |
| revolution (rpm) | 90 | 450 | 450 | 450 |
| shearing speed (sec⁻¹) | 570 | 2850 | 2850 | 2850 |

| aqueous emulsion | | | | |
|---|---|---|---|---|
| volume-based median size (µm) | 0.62 | 0.41 | 0.43 | 0.37 |
| dispersed condition *4 | ○ | ○ | ○ | ○ |

| | | | | |
|---|---|---|---|---|
| *1: registered trademark of ADEKA K.K. *2: content of polyoxyethylene block in polyoxyethylene polyoxypropylene block copolymer (B) *3: formula weight of polyoxypropylene block in polyoxyethylene polyoxypropylene block copolymer (B) *4: mark "×" means generation of an aqueous phase after allowing to stand still at about 25°C for one week mark "○" means generation of no aqueous phase even after allowing to stand still at about 25°C for one week | | | | |

### (Example 6)

A polyethylene plate having a membrane containing an ethylene/methyl methacrylate copolymer as the main component can be obtained by coating the aqueous emulsion obtained in Example 1 on a polyethylene plate, then, drying this in a ventilated oven of 60°C.

### Industrial Applicability

According to the present invention, an aqueous emulsion containing a dispersed α-olefin/(meth)acrylate copolymer can be produced with high production efficiency. Particularly, an emulsion containing a dispersed particle having a volume-based median size of submicron order can be produced with high production efficiency.

## Claims

1. A method of producing an aqueous emulsion comprising a first step of kneading a mixture containing the following copolymer (A) and a polyoxyethylene polyoxypropylene block copolymer (B) by a multi-screw shearing mixer under heating to obtain a kneaded material, and a second step of dispersing the kneaded material obtained in the first step in water:
Copolymer (A): a copolymer containing a structural unit derived from at least one α-olefin selected from the group consisting of ethylene and propylene and a structural unit derived from at least one (meth)acrylate selected from the group consisting of acrylates having 4 to 12 carbon atoms and methacrylates having 5 to 12 carbon atoms.

2. The method according to Claim 1, wherein the copolymer (A) is a copolymer containing a structural unit derived from ethylene and a structural unit derived from at least one (meth)acrylate selected from the group consisting of methyl acrylate, ethyl acrylate, methyl methacrylate and ethyl methacrylate.

3. The method according to Claim 1 or 2, wherein the content of said structural unit derived from at least one (meth)acrylate in the copolymer (A) is 10 to 40 mol% with respect to 100 mol% of all structural units constituting the copolymer (A).

4. The method according to any one of Claims 1 to 3, wherein the polyoxyethylene polyoxypropylene block copolymer (B) contains a polyoxyethylene block in an amount of 20 to 90 wt%, and the formula weight of the polyoxypropylene block contained in the polyoxyethylene polyoxypropylene block copolymer (B) is 1000 to 5000.

5. The method according to any one of Claims 1 to 4, wherein kneading in the first step is carried out at a shearing speed of 500 sec⁻¹ to 30000 sec⁻¹.

6. The method according to any one of Claims 1 to 5, wherein the heating temperature in the first step is 70°C to 120°C.

7. The method according to any one of Claims 1 to 6, wherein the multi- screw shearing mixer in the first step is a multi- screw extruder.

8. An aqueous emulsion comprising a dispersed particle containing the following copolymer (A) and a polyoxyethylene polyoxypropylene block copolymer (B) and dispersed in water, wherein the dispersed particle has a volume-based median size of 0.8 µm or less:
Copolymer (A): a copolymer containing a structural unit derived from at least one α-olefin selected from the group consisting of ethylene and propylene and a structural unit derived from at least one (meth)acrylate selected from the group consisting of acrylates having 4 to 12 carbon atoms and methacrylates having 5 to 12 carbon atoms.

9. A membrane obtained by coating the aqueous emulsion according to Claim 8 on a base material, and removing water from the coated aqueous emulsion.
